# EUROPÄISCHE PATENTSCHRIFT

(11) **EP 0 341 390 B1**
(45) Veröffentlichungstag und Bekanntmachung des Hinweises auf die Patenterteilung: **29.12.1993**
(21) Anmeldenummer: 89104147.7
(22) Anmeldetag: 09.03.1989
(51) Int. Cl.: F04B 1/04, F16J 9/22

(54) **Kolbeneinrichtung für eine Kolbeneinheit**
Piston device for a piston unit
Dispositif de piston pour une unité de piston

(30) Priorität: 10.05.1988 CH 1769/88
(43) Veröffentlichungstag der Anmeldung: 15.11.1989
(73) Patentinhaber: VON ROLL HYDRAULIK AG, 4702 Oensingen (CH)
(72) Erfinder: Rébel, József, Dr., CH-4710 Balsthal (CH)
(74) Vertreter: EGLI-EUROPEAN PATENT ATTORNEYS

(56) Entgegenhaltungen:
- DE-A- 2 163 158
- DE-A- 2 915 239
- DE-C- 968 651
- US-A- 2 483 856

## Beschreibung

Die Erfindung betrifft eine Kolbeneinrichtung für eine Kolbeneinheit gemäss dem Oberbegriff der Anspruchs 1. Der Anwendungsbereich solcher Kolbeneinrichtungen erstreckt sich vor allem auf das Gebiet von Kolbeneinheiten, die als Kraft- oder Arbeitsmaschine verwendet werden. Das Arbeitsmittel ist hierbei ein unter Druck stehendes Gas, beispielweise Luft, oder ein unter Druck stehendes Fluid, beispielsweise ein Hydrauliköl.

Kolbeneinrichtungen für solche Kolbeneinheiten sind in verschiedenen Ausführungen bekannt. Bei einer bekannten Ausführungsform (US-PS 4 454 802) ist der in einer Zylinderbohrung geführte Kolben stirnseitig über ein Kugelgelenk an einem Gleitschuh abgestützt. Der Gleitschuh seinerseits ist auf einer Stützfläche abgestützt, wobei der Gleitschuh und die Stützfläche sich relativ zueinander bewegen.

Der Kolben und der Gleitschuh sind miteinander durch ein Kupplungsglied verbunden, welches an seinen Enden gegeneinandergerichtete kugelzonenförmige Köpfe aufweist, deren Kugelflächen mit im Innern des Kolbens und des Gleitschuhs angeordneten konkaven Kugelflächen zusammenwirken, so dass der Kolben und der Gleitschuh zusammengehalten werden. Da während des Betriebes einer solchen Kolbeneinheit Relativbewegungen zwischen dem Gleitschuh und dem Kolben und damit im Kugelgelenk auftreten, ist es erforderlich, dass das Kupplungsglied eine solche Bewegung erlaubt. Nun ist zwar bei der bekannten Ausführungsform eine solche Bewegung möglich, jedoch bewirken die beiden entgegengesetzt gerichteten kugelzonenförmigen Köpfe, dass Klemmwirkungen oder auch Spiel in den Gelenkflächen des Kupplungsgliedes auftreten können, die zu Beschädigungen der Oberfläche der Gleitflächen führen können.

Eine weitere bekannte Ausführungsform einer Kolbeneinrichtung (GB-PS 1 357 995) weist eine Kolben-Gleitschuhkonstruktion auf, bei welcher im Gegensatz zu der vorstehend beschriebenen Ausführungsform der Kolben stirnseitig eine konvexe Kugelfläche und der Gleitschuh eine konkave Gelenkfläche aufweist. Zudem weist das Kupplungsglied nur an einem Ende eine kuglig ausgebildete Gelenkfläche auf, während das andere Ende fest mit dem Gleitschuh verbunden ist. Nachteilig ist jedoch bei dieser Ausführungsform die feste Verbindung zwischen dem Gleitschuh und dem Kupplungselement. Dadurch treten zusätzliche Beanspruchungen und/oder Klemmwirkungen in den Gelenkflächen auf, die zu Beschädigungen führen können.

Die Erfindung betrifft ebenfalls eine Kolbeneinrichtung, bei welcher der Kolben und der Gleitschuh über ein Kugelgelenk zusammenwirken und der Kolben und der Gleitschuh durch ein Kupplungsglied miteinander verbunden sind.

Aufgabe der Erfindung ist es, eine Kolbeneinrichtung der eingangs beschriebenen Art so weiterauszugestalten, dass die Relativbewegung zwischen dem Kolben und dem Gleitschuh klemmfrei und spielfrei erfolgen kann.

Diese Aufgabe wird die kennzeichnenden Merkmale des Anspruchs 1 gelöst. Bei der erfindungsgemässen Ausführung sind zwischen dem Kolben, dem Gleitschuh und dem Kupplungsglied drei Kugelflächen mit unterschiedlichen Kadien vorhanden, die alle dasselbe Kugelzentrum aufweisen.

Ein Ausführungsbeispiel der Erfindung ist in der Zeichnung dargestellt und nachfolgend beschrieben. Es zeigen:
- Fig. 1: einen Längsschnitt einer Kolbeneinrichtung, wie sie für eine Kolbeneinheit, insbesondere Hydraulik-Pumpen und -Motoren, Verwendung finden kann, und
- Fig. 2: einen Längsschnitt durch eine Variante des in Fig. 1 dargestellten Kupplungsgliedes.

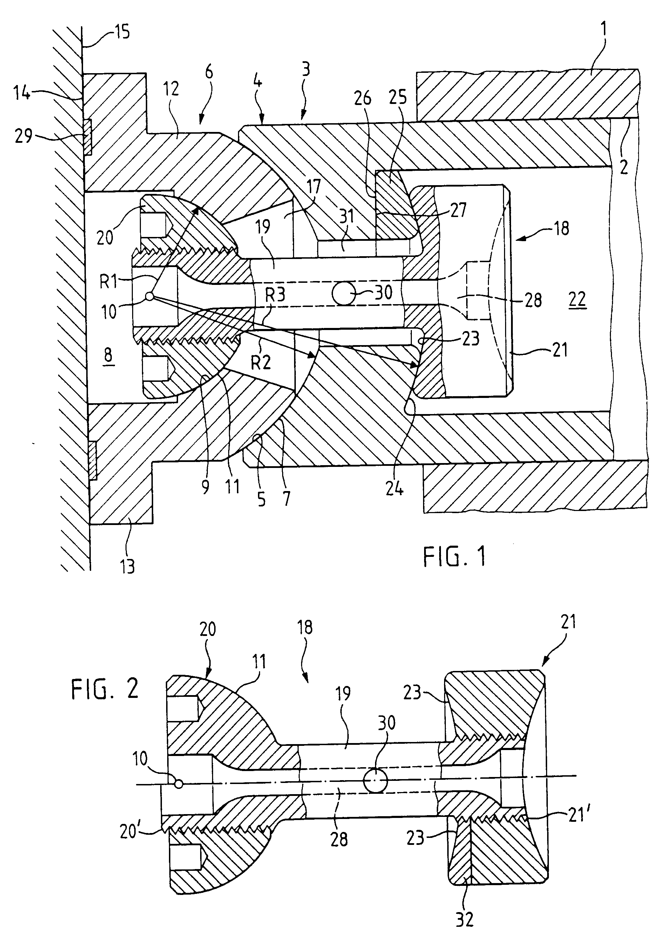

In Fig. 1 ist mit 1 ein teilweise dargestellter Zylinder bezeichnet, in welchem in einer Zylinderbohrung 2 ein Kolben 3 geführt ist. Der Kolben 3 ist an dem einen, nicht dargestellten Ende durch ein Druckmedium beaufschlagt, während das andere Ende 4 stirnseitig eine konkave, kugelzonenförmige Gleitfläche aufweist, auf welcher ein Gleitschuh 6 mit einer konvexen kugelzonenförmigen Fläche 7 gelagert ist.

Der Gleitschuh 6 weist einen Hohlraum 8 auf, welcher mit einem Radius R1 in seinem Grund in eine konkave, kugelzonenförmige Fläche 9 übergeht, deren Kugelzentrum 10 im Hohlraum 8 liegt. Auch die konvexe, kugelzonenförmige Fläche 7 des Gleitschuhs 6 mit einem Radius R2 weist dasselbe Kugelzentrum 10 auf. Zwischen diesen beiden kugelzonenförmigen Flächen 5, 7 weist die Wand 12 des Gleitschuhs 6 eine hohlkugelförmige Gestalt auf, die in einen Flansch 13 übergeht, dessen Stirnseite 14 eine Gleitfläche bildet, die auf einer nicht näher dargestellten Stützfläche 15 abgestützt ist. Die Stirnseite 14 des Gleitschuhs 6 und die Stützfläche 15 weisen zueinander eine Relativbewegung auf, wobei die Stützfläche 15 fest und die Stirnseite 14 des Gleitschuhs 6 rotierend oder umgekehrt die Stützfläche 15 rotierend und die Stirnseite 14 des Gleitschuhs 6 ortsfest ist, je nachdem, um welchen Typ einer Kolbeneinheit es sich handelt. Rotiert der Zylinder 1, bewegt sich die Stirnseite 14 des Gleitschuhs 6 auf der ortsfesten Stützfläche 15, wie dies bei Axialkolbeneinheiten mit rotierendem Zylinder der Fall ist. Die Axialkolbeneinheit kann jedoch auch einen ortsfesten Zylinder 1 aufweisen, so dass sich in diesem Fall die Stützfläche 15 dreht.

Im Gleitschuh 6 ist in dessen Wand 12 ein Durchgang 17 vorgesehen, durch welchen ein Kupplungsglied 18 ragt. Das Kupplungsglied 18 setzt sich aus einem Schaftteil 19 und zwei an dessen Enden angeordneten Gelenkköpfen 20, 21 zusammen. Der Kopf 20 weist eine kugelige Form mit einer kugelzonenförmigen Fläche 11 auf. Der Kopf 20 ist mit dem Schaftteil 19 fest verbunden, beispielsweise durch eine Gewindeverbindung.

Das Kupplungsglied 18 kann jedoch auch in anderer Weise zusammengesetzt sein, wie dies in Fig. 2 dargestellt ist. Gemäss dem obern Teil dieser Figur ist der im Gleitschuh 6 liegende Gelenkkopf 20 mit dem Schaftteil 19 integral verbunden und ist demgemäss ein einziger Teil. In diesem Fall ist es erforderlich, den im Kolben 3 liegenden Gelenkkopf 21 als separaten Teil auszubilden und ihn in geeigneter Weise mit dem Schaftteil 19 zu verbinden, z.B. durch eine Gewindeverbindung 21′.

Wie aus dem untern Teil von Fig. 2 ersichtlich ist, kann das Kupplungsglied 18 auch dreiteilig ausgeführt sein, wobei die beiden Gelenkköpfe 20, 21 mit dem Schaftteil 19 fest verbunden sind, beispielsweise durch Gewindeverbindungen 20′, 21′.

Im untern Teil von Fig. 2 ist zudem der Gelenkkopf 21 zweiteilig ausgebildet, wobei an der gegen den Gelenkkopf 20 gerichteten Seite des Gelenkkopfes 21 eine Platte 32 angeordnet ist, welche die konkave Kugelzone 23 aufweist. Da der Gelenkkopf 21 keine weitere Gleitfunktion ausübt, genügt es, wenn die Platte 32 aus einem Material hergestellt wird, das besonders günstige Gleiteigenschaften und eine hohe Abriebfestigkeit aufweist, z. B. aus einem wärmebehandelten, insbesondere legierten Stahl, aus einem bronzebeschichteten Stahl oder ganz aus Bronze. Besteht der Gelenkkopf 21 und auch der Gelenkkopf 20 aus einem Stück, gelten für die Ausbildung der konkaven Kugelzone 23 und der konvexen, kugelzonenförmigen Gleitfläche 11 die gleichen Ueberlegungen wie für die Ausbildung der Platte 32.

Der Kopf 21 liegt im Innenraum 22 des hohlen Kolbens 3 und weist Zylinderform auf, die an der, dem Gleitschuh 6 zugewandten Seite 23 die Form einer konkaven Kugelzone aufweist. Die Kugelzone 23 liegt auf einer konvexen Kugelzone 24, die am Grund des Innenraums 22 des Kolbens 3 angeordnet ist. Die Kugelzone 24 kann, siehe den untern Teil von Fig. 1, als integrales Teil des Kolbens 3 ausgebildet sein. Oder sie kann, siehe die obere Hälfte von Fig. 1, als separater Teil 25 mit einer ebenen Unterseite 26 hergestellt werden, der auf den in diesem Fall ebenen Boden 27 im Innenraum 22 des Kolbens 3 gelegt wird. Zweckmässig weist der Krümmungsradius R3 der beiden Kugelzonen 23, 24 dasselbe Kugelzentrum 10 auf wie die Krümmungsradien der kugelzonenförmigen Flächen 5, 7 und 9, 11.

Das Kupplungsglied 18 ist in seiner ganzen Länge mit einer Bohrung 28 versehen, durch welche das im Innenraum 22 des Kolbens 3 befindliche Druckmedium in den Hohlraum 8 geleitet und von dort für die Speisung von Druckfeldern 29 in der Stirnseite 24 verwendet werden kann. Im Schaftteil 19 ist eine Querbohrung 30 angeordnet. Diese steht mit der Längsbohrung 28 in Verbindung und ermöglicht die Einleitung des Druckmediums in den Durchgang 17 in der Wand 12 des Gleitschuhs 6 und in die im Boden des Kolbens 3 vorgesehene Bohrung 31. Dadurch werden alle drei Gleitflächen 5, 7; 9, 11 und 23, 25 durch das Druckmedium beaufschlagt. Da die Krümmungsradien dieser drei Gleitflächen das gleiche Kugelzentrum 10 aufweisen, sind bei Bewegungen zwischen dem Kolben 3 und dem Gleitschuh 6 drei Gleitflächen vorhanden, die ein klemmfreies Verschieben des Kupplungsgliedes 18 gegenüber dem Kolben 3 und dem Gleitschuh 6 ermöglichen. Dadurch wird eine Beschädigung der Gleitflächen zuverlässig vermieden.

Für den Kolben 3, den Gleitschuh 6, den separaten Teil 25 und die Stützfläche 15 gelten bezüglich der Materialauswahl dieselben Ueberlegungen, wie sie vorstehend für das Kupplungsglied 18 gemacht wurden. Im Hinblick auf die verhältnismässig hohen Flächenpressungen die an den verschiedenen Gleitflächen auftreten, muss eine Materialkombination gewählt werden, die günstige Reibeigenschaften und Abriebfestigkeit aufweist. Günstig ist z.B. an den vorhandenen Gleitflächen eine Kombination mit Bronce für die eine Gleitfläche und wärmebehandelter legierter Stahl für die andere Gleitfläche.

## Patentansprüche

1. Kolbeneinrichtung für eine Kolbeneinheit mit mindestens einem in einem Zylinder (1) geführten Kolben (3), welcher an der einen Stirnseite von einem Druckmedium beaufschlagt und an der andern Stirnseit (4) mit einem Gleitschuh (6) versehen ist, mit welchem er über ein Kugelgelenk zusammenwirkt, und mittels desselbener auf einer Stützfläche (15) abgestützt ist, wobei der Kolben (3) und der Gleitschuh (6) durch ein mit einer Längsbohrung (28) versehenes Kupplungsglied (18) miteinander verbunden und zusammengehalten sind, welches an seinen Enden mit je einem Gelenkkopf (20, 21) versehen ist, der jeweils einen Teil eines im Innern des Kolbens (3) bzw. des Gleitschuhs (6) angeordneten Kupplungs-Kugelgelenks (9, 11; 23, 24) bildet, **dadurch gekennzeichnet, dass** die Kontaktflächen der Kupplungs-Kugelgelenke (9, 11; 23, 24) und die Kontaktfläche des Kugelgelenks (5, 7) zwischen der Stirnseite (4) des Kolbens (3) und des Gleitschuhs (6) Teile von Kugelflächen unterschiedlicher Radien (R1, R2, R3) mit gemeinsamem Mittelpunkt (10) sind.

2. Kolbeneinrichtung nach Anspruch 1, dadurch gekennzeichnet, dass der gemeinsame Mittelpunkt (10) im Innern des Gleitschuhs (6) angeordnet ist.

3. Kolbeneinrichtung nach Anspruch 2, dadurch gekennzeichnet, dass die in dem Kupplungs-Kugelgelenk (23, 24) zwischen dem Boden des Kolbens (3) und dem Kupplungsglied (18) liegende kugelzonenförmige Fläche (24) des Kolbens (3) ein integraler Teil des Kolbenbodens ist.

4. Kolbeneinrichtung nach Anspruch 2, dadurch gekennzeichnet, dass die konvexe Kugelzonenfläche (24) des Kupplungskugelgelenkes (23, 24) zwischen dem Kolben (3) und dem Kupplungsglied (18) Teil einer im Innern des Kolbens liegenden separaten Platte (25) ist.

5. Kolbeneinrichtung nach Anspruch 4, dadurch gekennzeichnet, dass die separate Platte (25) auf der Unterseite eine ebene Fläche (26) aufweist, die auf einer ebenen Fläche (27) im Innern des Kolbens (3) abgestützt ist.

6. Kolbeneinrichtung nach Anspruch 1, dadurch gekennzeichnet, dass in der Längsbohrung (28) des Kupplungsgliedes (18) eine Querbohrung (30) im Schaftteil (19) angeordnet ist, durch welche der den Schaffte umgebene freie Raum (17, 31) in dem Kolben (3) und im Gleitschuh (6) durch das Druckmedium im Kolben (3) beaufschlagt ist.

## Claims

1. A piston device for a piston unit with at least one piston (3) contained in a cylinder (1), which piston is acted upon on one end face by a pressure medium and, on the other end face (4), is provided with a sliding block (6) with which it cooperates, by way of a spherical joint, and by means of which it is supported on a supporting surface (15), wherein the piston (3) and the sliding block (6) are connected to each other and held together by a coupling element (18) provided with a longitudinal bore (28), which element is provided at each of its ends with a joint head (20, 21) which forms in each case a part of a coupling spherical joint (9, 11; 23, 24) arranged in the interior of the piston (3) or of the sliding block (6), characterised in that the contact surfaces of the coupling spherical joints (9, 11; 23, 24) and the contact surface of the spherical joint (5, 7) between the end face (4) of the piston (3) and of the sliding block (6) are parts of spherical surfaces of differing radii (R1, R2, R3) with a common central point (10).

2. A piston device according to claim 1, characterised in that the common central point (10) is arranged in the interior of the sliding block (6).

3. A piston device according to claim 2, characterised in that the spherical-zone-shaped surface (24) of the piston (3) lying in the coupling spherical joint (23, 24) between the base of the piston (3) and the coupling element (18) is an integral part of the piston base.

4. A piston device according to claim 2, characterized in that the convex spherical zone surface (24) of the coupling spherical joint (23, 24) between the piston (3) and the coupling element (18) is a part of a separate plate (25) lying in the interior of the piston.

5. A piston device according to claim 4 characterised in that the separate plate (25) has on the lower side a plane surface (26) which is supported on a plane surface (27) in the interior of the piston (3).

6. A piston device according to claim 1 characterised in that in the longitudinal bore (28) of the coupling element (18) there is arranged a transverse bore (30) in the shaft part (19), through which bore the free area (17, 31) surrounding the shaft part in the piston (3) end in the sliding block (6) is acted upon by the pressure medium in the piston (3).

## Revendications

1. Dispositif de piston pour une unité de piston avec au moins un piston (3) guidé dans un cylindre (1) qui est sollicité par un milieu sous pression à un de ses côtés frontaux et qui est muni, à son autre côté frontal (4) d'un sabot de glissement (6), avec lequel il coopère à l'intervention d'un joint sphérique et au moyen duquel il s'appuie sur une surface d'appui (15), le piston (3) et le sabot de glissement (6) étant reliés l'un à l'autre et maintenus ensemble à l'intervention d'un élément d'accouplement (18) dans lequel est pratiqué un alésage longitudinal (28), qui est muni, à ses extrémités respectivement d'une tête articulée (20, 21) qui forme chaque fois une partie d'un joint sphérique d'accouplement (9, 11; 23, 24) disposé à l'intérieur du piston (3) ou du sabot de glissement (6), caractérisé en ce que les surfaces de contact des joints sphériques d'accouplement (9, 11; 23, 24) et les surfaces de contact du joint sphérique (5, 7) entre le côté frontal (4) du piston (3) et le sabot de glissement (6) sont des parties de surfaces sphériques de rayons différents (R1, R2, R3) ayant un centre commun (10).

2. Dispositif de piston selon la revendication 1, caractérisé en ce que le centre commun (10) est disposé à l'intérieur du sabot de glissement (6).

3. Dispositif de piston selon la revendication 2, caractérisé en ce que la surface (24) en forme de zone sphérique du piston (3), disposée dans le joint sphérique d'accouplement (23, 24) entre la face inférieure du piston (3) et l'élément d'accouplement (18), est une partie intégrale de la face inférieure du piston.

4. Dispositif de piston selon la revendication 2, caractérisé en ce que la surface convexe (24) en forme de zone sphérique du joint sphérique d'accouplement (23, 24) entre le piston (3) et l'élément d'accouplement (18) est une partie d'une plaque séparée (25) disposée à l'intérieur du piston.

5. Dispositif de piston selon la revendication 4, caractérisé en ce que la plaque séparée (25) présente, sur son côté inférieur, une surface plane (26) qui vient s'appuyer sur une surface plane (27) à l'intérieur du piston (3).

6. Dispositif de piston selon la revendication 1, caractérisé en ce que, dans l'alésage longitudinal (28) de l'élément d'accouplement (18), est pratiqué un alésage transversal (30) dans la partie (19) en forme de tige, par lequel l'espace libre (17, 31) entourant la partie en forme de tige dans le piston (3) et dans le sabot de glissement (6) est sollicité par le milieu sous pression dans le piston (3).
